# EUROPÄISCHE PATENTANMELDUNG

(11) **EP 1 518 887 A1**
(43) Veröffentlichungstag der Anmeldung: **30.03.2005**
(21) Anmeldenummer: 04022389.3
(22) Anmeldetag: 21.09.2004
(51) Int. Cl.: C08J 5/18, B32B 27/32

(54) **Matte, biaxial gereckte Polypropylenfolie mit verbesserter Kratzfestigkeit, ein Verfahren zu deren Herstellung sowie deren Verwendung als Verpackungs-, Veredelungs- oder Trägerfolie**

(30) Priorität: 23.09.2003 DE 10343874
(71) Anmelder: Wipak Walsrode GmbH & Co. KG, 29656 Walsrode (DE)
(72) Erfinder: Sperlich, Bernd, Dr., 29664 Walsrode (DE); Wunderlich, Hans, Dr., 29699 Bomlitz (DE); Wagner, Helmut, 29699 Bomlitz (DE); Schwarz, Willi, 29699 Bomlitz (DE)
(74) Vertreter: Läufer, Martina, Dr.

(57) **Zusammenfassung**

Matte, zwei-oder mehrschichtige, biaxial gereckte Polypropylenfolie aus einer außen liegenden Mattschicht, einer Kemschicht und wahlweise weiteren Schichten, die sich auf der gegenüberliegenden Seite der Mattschicht an die Kernschicht anschließen, dadurch gekennzeichnet, dass die Kemschicht eine Propylen-homo- oder copolymerschicht ist, und die Mattschicht eine Mischung aus zwei nicht homogen mischbaren Komponenten A und B sowie teilchenförmigen Additiven in einer Konzentration von 0,5 - 20 Gew.-%, bezogen auf die Mattschicht, enthält.

Weiterhin beschrieben wird ein Verfahren von ihrer Herstellung sowie deren Verwendung als Verpackungsfolie, Veredlungsfolie für Druckerzeugnisse oder Trägerfolie für eine Klebeschicht.

## Beschreibung

Die Erfindung betrifft matte, mehrschichtige, biaxial orientierte Polypropylenfolien, die durch mindestens eine einseitige, coextrudierte Schicht aus einer Polymermischung ihr mattes Aussehen erhalten und sich durch eine besonders gute Kratzfestigkeit auszeichnen.

Es ist bereits eine Vielzahl von matten, biaxial gereckten Polypropylenfolien bekannt. So wird in EP-A 0 616 885 eine Polypropylenfolie mit einer Mattschicht aus Polypropylen-Polyethylen-Blockcopolymeren, Co- oder Terpolymeren, die mit polaren Gruppen und mit elastomeren Komponenten modifiziert wurden, statistischen Copolymeren aus Propylen und Ethylen und HDPE beschrieben. In EP-A 564 846 enthält die Mattschicht kein HDPE, stattdessen ein Polyamid.

Die Folien werden durch Extrusion durch eine Breitschlitzdüse, Verfestigung der Folien auf einer Gießwalze und anschließender biaxialer Verstreckung hergestellt. Bei längerer Produktion entstehen bei den beschriebenen Formulierungen der Mattschicht aber Ablagerungen auf der Gießwalze und den folgenden Walzen, was zu großen Reinigungsaufwand und Stillständen der Produktionsanlage führt und die kontinuierliche Produktion erschwert. Außerdem weisen diese Folien eine leichte Verkratzbarkeit der Mattschicht auf, was bei der Weiterverarbeitung.der Folien (z.B. Kaschierung auf Papier) ein großes Problem darstellt. Schon durch geringe mechanische Einwirkung entstehen glänzende Streifen, die das Erscheinungsbild der Folien verschlechtern.

EP-A 0 563 796 beschreibt ebenfalls eine Polypropylenfolie mit einer Mattschicht. Diese besteht hier aus Polypropylenhomo- oder Copolymeren und HDPE.

In US-A 6 534 153 besteht die Mattschicht aus einem hochmolekularem Polyethylen hoher Dichte und einem dazu nicht kompatiblen Polymer.

In beiden Fällen ist die geringe Kratzfestigkeit dieser Folien von Nachteil. Insbesondere bei hochwertigen Anwendungen, wie z.B. bei der Kaschierung von Buchrücken, ist eine gute Kratzfestigkeit und gleichmäßige Mattigkeit der Folie erwünscht.

In der Patentanmeldung US-A 4 148 955 wird eine Mattfolie beschrieben, bei der der Matteffekt nicht durch Polymermischungen, sondern durch Zugabe von Glaskugeln erreicht wird. Diese Folie zeichnet sich ebenfalls durch eine verbesserte Kratzfestigkeit aus. Mit Feststoffen als Füllmaterial, wie z.B. Glaskugeln, Titandioxid oder Calciumcarbonat, kann zwar auch ein Matteffekt erzielt werden. Die optische Qualität und die Gleichmäßigkeit der Mattschicht ist aber für anspruchsvolle Anwendungen, wie z.B. die Kaschierung von Buchrücken, unzureichend. Außerdem . handelt es sich bei dieser Folie um eine nicht orientierte (ungereckte) Folie, die bevorzugt aus Polyestern und Polyamiden besteht.

Beim Reckvorgang führen Füllstoffe häufig zu Aufrissen in der Folie, wodurch das optische Erscheinungsbild der Mattfolie verschlechtert wird.

Deshalb war es Aufgabe der vorliegenden Erfindung, eine biaxial orientierte Mattfolie bereitzustellen, die eine verbesserte Kratzfestigkeit und ein für anspruchsvolle Kaschieranwendungen geeignetes Erscheinungsbild aufweist. Außerdem soll die Herstellung der Folie an Coextrusionseinrichtungen für biaxial gereckte Polypropylenfolien nicht durch Bildung von Ablagerungen auf den Walzen behindert werden.

Gegenstand der vorliegenden Erfindung sind matte, zwei- oder mehrschichtige, biaxial gereckte Polypropylenfolien aus einer außen liegenden Mattschicht, einer Kernschicht und wahlweise weiteren Schichten, die sich auf der gegenüberliegenden Seite der Mattschicht an die Kernschicht anschließen, dadurch gekennzeichnet, dass die Kernschicht im wesentlichen aus einem Propylen-homo- oder - copolymer und gegebenenfalls Additiven besteht und die Mattschicht aus einer Mischung aus zwei nicht homogen mischbaren Polymer- bzw. KunststoffKomponenten A und B und gegebenenfalls Additiven besteht und teilchenförmige Additive in einer Konzentration von 0,5 bis 20 Gew.-%, bevorzugt in einer Konzentration von 3 bis 15 Gew.-%, besonders bevorzugt in einer Konzentration von 5 bis 15 Gew.-%, bezogen auf die Mattschicht enthält und die Mattseite der Folie eine sehr gute Kratzfestigkeit aufweist. Die durchschnittliche Größe der teilchenförmigen Additive beträgt 0,5 bis 15 µm, bevorzugt 3 bis 7 µm. Es eignen sich grundsätzlich alle organischen Materialien (zum Beispiel vernetzte Acrylat-Teilchen) und anorganischen Materialien, die im Teilchenform in einer Kunststoffmatrix dispergierbar sind. Unter anderem sind alle teilchenförmigen Additive geeignet, die üblicherweise als teilchenförmige Antiblockmittel in Kunststofffolien eingesetzt werden. Besonders geeignet sind anorganische Zusatzstoffe wie natürliches oder synthetisches Siliciumdioxid, Calciumcarbonat, Magnesiumsilicat, Aluminiumsilikat, Calciumphosphat und dergleichen. Die teilchenförmigen Additive können entweder in Form eines Masterbatches zugegeben werden oder direkt in einer der Mischungskomponenten eingearbeitet sein. Bei der Komponente A handelt es sich bevorzugt um ein Polyethylen hoher Dichte. Bei der Komponente B handelt es sich um einen beliebigen Thermoplasten, der mit Komponente A nicht homogen mischbar ist. Bevorzugt kommt ein Polypropylen-homopolymeres oder ein Copolymeres aus Propylen und Ethylen oder Propylen und Butylen oder ein Terpolymeres aus Propylen, Ethylen und Butylen oder eine Mischung aus 2 oder mehreren der genannten Homo-, Co- und Terpolymeren zum Einsatz. Bei der Mischungskomponente A kann es sich außerdem um ein Blend der beiden Blendkomponenten I und II handeln, wobei die Blendkomponenten I im Wesentlichen ein HDPE (High Density Poly Ethylene) ist und die Blendkomponente II im wesentlichen ein Polypropylenhomopolymeres oder ein Copolymeres aus Propylen und Ethylen oder Propylen und Butylen oder ein Terpolymeres aus Propylen, Ethylen und Butylen oder eine Mischung aus 2 oder mehreren der genannten Homo-, Co- und Terpolymeren ist.

Das Verhältnis der Blendkomponenten I und II liegt bevorzugt im Bereich von I : II = 10 : 90 bis 90 : 10 und das Verhältnis der Mischungskomponenten A und B liegt bevorzugt im Bereich von A : B = 10 : 90 bis 90 : 10.

Die Dicke der Mattschicht liegt bevorzugt zwischen 0,5 µm und 5 µm. Die Dicke der gesamten Folie liegt bevorzugt zwischen 8 µm und 50 µm. Die Folie hat auf der Mattseite einen Glanz kleiner als 80 Glanzeinheiten, bevorzugt liegt der Glanz zwischen 10 und 45 Glanzeinheiten, gemessen bei 85° nach ASTM-D 523-78.

Alle Schichten der Folie können weitere Additive enthalten, die üblicherweise in BOPP-Folien zum Einsatz kommen, wie z.B. Antistatika oder Gleitmittel. Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 Gew.-% als Antistatikum eingesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere geeignetes aliphatisches Säureamid ist Erucasäureamid. Der Zusatz von Polydimethylsiloxanen ist im Bereich von 0,02 bis 2 Gew.-% bevorzugt, insbesondere Polydimethylsiloxane mit einer Viskosität von 5000 bis 1 000 000 mm²/s.

Die erfindungsgemäßen Folien können nach den an sich bekannten Verfahrensschritten wie Laminierung, Beschichtung oder Schmelzcoextrusion hergestellt werden. Ein weiterer Gegenstand der Erfindung ist ein Verfahren zur Herstellung der erfindungsgemäßen Folien, bei dem die der einzelnen Schichten der Folie entsprechenden Schnecken durch eine Flachdüse coextrudiert werden, die coextrudierte Folie biaxial mit einem Längsstreckverhältnis von 4:1 bis 7:1 und einem Querstreckverhältnis von 8:1 bis 12:1 gestreckt wird und die biaxial gestreckte Folie nach einer Thermofixierung dann gegebenenfalls corona-, plasma-, fluor- oder flammbehandelt wird. Nach der Extrusion und der Verfestigung des Dickfilms auf der Gießwalze wird der Film in Laufrichtung (längs) mit einem Verstreckungsquotienten von 4/1 bis 7/1 bei einer Temperatur von 120°C - 150°C gereckt. Das Reckverhältnis in Querrichtung liegt vorzugsweise zwischen 8/1 und 12/1. und das Querrecken des Filmes wird bei einer Temperatur zwischen 130°C und 170°C vorgenommen. Die nachfolgende Thermofixierung wird vorzugsweise bei 1°C - 40°C unter der Querrecktemperatur durchgeführt. Um die Affinität der weitgehend unpolaren Folienoberfläche zu den Druckfarben zu gewährleisten, ist es nötig, die Folie einer Corona(Sprüh) Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung.

Die wesentlichen Merkmale der erfindungsgemäßen Folien sind die nicht homogen mischbaren Polymeren der Mattschicht und der hohe Gehalt an teilchenförmigen Additiven. Der Gehalt an teilchenförmigen Additiven ist deutlich höher, als üblicherweise in gereckten Polypropylenfolien eingesetzt wird. Durch die nicht homogen mischbaren Polymeren wird eine rauhe Oberfläche erzeugt, die zu dem gewünschten Matteffekt führt. Die so erzeugte Mattschicht erfüllt zwar die hohen Anforderungen an das optische Erscheinungsbild, ist aber naturgemäß sehr empfindlich gegenüber mechanischen Einwirkungen. Schon leichte Berührungen mit spitzen Gegenständen, aber auch flächigen Gegenständen führen zu einer lokalen Glättung der rauhen Oberfläche, was zu einer unerwünschten Veränderung der optischen Eigenschaften in diesem Bereich führt. Überraschenderweise wurde gefunden, dass durch eine hohe Konzentration an teilchenförmigen Additiven die Kratzfestigkeit der Mattschicht deutlich verbessert werden kann. Dabei ist entscheidend, dass der Matteffekt selbst nicht durch die teilchenförmigen Additiven erzeugt wird, sondern durch die nicht homogen mischbaren Polymere der Mattschicht. Außerdem wurde überraschenderweise festgestellt, dass die hohe Konzentration von teilchenförmigen Additiven in der Mattschicht der erfindungsgemäßen Folie kaum zu Aufrissen in der Mattschicht beim Reckvorgang der Folie führt. Solche Aufrisse wären als glänzende Punkte in der Folie sichtbar und würden das gleichmäßig matte Erscheinungsbild der Folie stören. Bei Verwendung der in EP-A 616 885 oder in EP-A 564 846 beschriebenen Zusammensetzung der Mattschicht und Verwendung einer hohen Konzentration von teilchenförmigen Additiven weist die Folie deutlich mehr Aufrisse auf, als es bei der erfindungsgemäßen Folie der Fall ist.

Gegenstand der vorliegenden Erfindung ist außerdem die Verwendung der erfindungsgemäßen Folie als Verpackungsfolie oder zur Veredelung (Kaschierung) von grafischen Druckerzeugnissen , wobei die Mattseite nicht zum Druckerzeugnis zeigt oder als Trägerfolie für eine Klebeschicht. Eine derartige Klebeschicht kann zum Beispiel aus Ethylen-Vinylacetat-Copolymeren bestehen.

### Beispiele:

### Beispiel 1:

Mittels Schmelzcoextrusion wurde ein Dickfilm mit dem Schichtenäufbau ABC hergestellt und nach der Verfestigung auf der Gießwalze in Laufrichtung (längs) mit einem Verstreckungsquotienten von 5/1 bei einer Temperatur von 100°C bis 130°C gereckt. Anschließend wurde der Film in Querrichtung mit einem Reckverhältnis von 10/1 und einer Temperatur von 150°C bis 160°C gereckt. Die nachfolgende Thermofixierung wird vorzugsweise bei 135°C - 160°C durchgeführt.
Die Gesamtdicke des gereckten Films betrug 15 µm.

### Außenschicht 1 (Mattschicht):

- Dicke:: 2 µm
- Material:: 54% Propylen/Ethylencopolymer mit 4,5% Ethylenanteil,
MFI: 5,0 g/10 min.
40% Polyethylen hoher Dichte (HDPE) mit einer Dichte von 0,956 g/cm3; Schmelzflussindex (190°C/50N) 1,6 g/10 min;
Schmelzpunkt (DSC) 130°C
6 % synthetische Siliziumdioxid-Teilchen mit einer mittleren Teilchengröße von 3 µm

### Basisschicht:

- Dicke:: 12 µm
- Material:: 99% isotaktisches Polypropylen; MFI:3.0 g/10 min
1% Erucasäureamid als Gleitmittel

### Außenschicht 2 (C):

- Dicke:: 1 µm
- Material:: 99,75 % isotaktisches Polypropylen;
MFI:3.0 g/10 min g/10 min.
0.25% SiO₂; mittlere Teilchengröße: 4 µm

### Beispiel 2:

Beispiel 1 wird wiederholt. Die Außenschicht 1 (Mattschicht) besteht aber aus folgenden Materialien:
- Material:: 54% Propylen/Ethylencopolymer mit 4,5% Ethylenanteil,
MFI: 5,0 g/10 min.
40% Polyethylen hoher Dichte (HDPE) mit einer Dichte von 0,956 g/cm3; Schmelzflussindex (190°C/50N) 1,6 g/10 min;
Schmelzpunkt (DSC) 130°C
6 % Aluminiumsilikat-Teilchen mit einer mittleren Teilchengröße von 5 µm

### Beispiel 3:

Beispiel 1 wird wiederholt. Die Außenschicht 1 (Mattschicht) besteht aber aus folgenden Materialien:
- Material:: 54% Propylen/Ethylencopolymer mit 4,5% Ethylenanteil,
MFI: 5,0 g/10 min.
40% Polyethylen hoher Dichte (HDPE) mit einer Dichte von 0,956 g/cm3; Schmelzflussindex (190°C/50N) 1,6 g/10 min;
Schmelzpunkt (DSC) 130°C
6 % synthetische Siliziumdioxid-Teilchen mit einer mittleren Teilchengröße von 5 µm

### Vergleichsbeispiel:

Beispiel 1 wird wiederholt. Die Außenschicht 1 (Mattschicht) besteht aber aus folgenden Materialien:
- Material:: 60% Propylen/Ethylencopolymer mit 4,5% Ethylenanteil,
MFI: 5,0 g/10 min.
40% Polyethylen hoher Dichte (HDPE) mit einer Dichte von
0,956 g/cm3; Schmelzflussindex (190°C/50N) 1,6 g/10 min;
Schmelzpunkt (DSC) 130°C

Aus der Tabelle wird deutlich, dass die Kratzfestigkeit der erfindungsgemäßen Folien deutlich verbessert wird. Überraschend war, dass die Gleichmäßigkeit und der visuelle Eindruck der Mattschicht nicht beeinträchtigt wurde. Auch Glanz und Trübung sind etwa im gleichen Bereich wie bei dem Vergleichsbeispiel.

| | Kratzfestigkeit | Glanz in Glanzeinheiten | Trübung (%) |
|---|---|---|---|
| Beispiel 1 | + | 20 | 74 |
| Beispiel 2 | + | 27 | 71 |
| Beispiel 3 | + | 23 | 75 |
| Vergleichsbeispiel | - | 25 | 71 |

### Meßverfahren:

### Krafzfestigkeit

Die Kratzfestigkeit wurde nach folgender Methode ermittelt:
Es werden jeweils 2 schwarze Papierbögen (DIN A 4) mittels Dispergierkleber mit der Folie beklebt, so dass die Mattschicht der Folie außen liegt. Anschließend werden die Bögen mit den Folienseiteh aufeinandergelegt. Die Bögen werden mittels eines Metallblocks auf einer Fläche von 5 cm x 5 cm mit einem Gewicht von 500 g belastet. Der untere Bogen wird fixiert und der obere Bogen wird mittels einer geeigneten Apparatur insgesamt 10 mal jeweils um 10 cm mit einer Geschwindigkeit von 1 cm/s horizontal hin und her bewegt.
Anschließend wird die Verkratzbarkeit des unteren Bogens visuell beurteilt:
(-): Die Mattschicht weist flächige Streifen (Kratzer) auf (> 2mm Breite), welche das visuelle Erscheinungsbild stark beeinträchtigen. Daneben findet man sehr feine Kratzer, welche die Optik nicht so stark beeinträchtigen.
(+): Die Mattschicht weist ausschließlich feine Kratzer (Breite < 0,5 mm) auf. Diese stören das Erscheinungsbild der Mattfolie kaum. Es sind keine flächigen Beschädigungen sichtbar.

### Glanz

Der Glanz wird nach ASTM D 2457 bestimmt. Er ist der unter einem Winkel von 85° reflektierter Lichtanteil in Glanzeinheiten (GE), bezogen auf einen Schwarzglasspiegel, als 100 GE Standard.

### Trübung

Die Trübung wird nach ASTM D 1003 bestimmt. Sie wird in % angegeben und ist das Verhältnis von difuser Lichttransmission zu totaler Lichttransmission multipliziert mit 100.

## Patentansprüche

1. Matte, zwei- oder mehrschichtige, biaxial gereckte Polypropylenfolie aus einer außen liegenden Mattschicht, einer Kernschicht und wahlweise weiteren Schichten, die sich auf der gegenüberliegenden Seite der Mattschicht an die Kernschicht anschließen, **dadurch gekennzeichnet, dass** die Kernschicht eine Propylen-homo- oder copolymerschicht ist, und die Mattschicht eine Mischung aus zwei nicht homogen mischbaren Polymer-Komponenten A und B sowie teilchenförmige Additive in einer Konzentration von 0,5 - 20 Gew.-%, bezogen auf die Mattschicht, enthält.

2. Folie nach Anspruch 1, **dadurch gekennzeichnet, dass** die Mattschicht teilchenförmige Additive in einer Konzentration von 3-15 Gew.-%, bezogen auf die Mattschicht, enthält.

3. Folie nach einem der Ansprüche 1 bis 2, **dadurch gekennzeichnet, dass** die teilchenförmigen Additive eine durchschnittliche Teilchengröße von 0,5 - 15 µm aufweisen.

4. Folie nach einem der Ansprüche 1 bis 2, **dadurch gekennzeichnet, dass** die teilchenförmigen Additive eine durchschnittliche Teilchengröße von 3 - 7 µm aufweisen.

5. Folie nach einem der Ansprüche 1 bis 4, **dadurch gekennzeichnet, dass** die. Mischungskomponente A ein HDPE enthält und die Mischungskomponente B ein Polypropylenhomopolymeres oder ein Copolymeres aus Propylen und Ethylen oder Propylen und Butylen oder ein Terpolymeres aus Propylen, Ethylen und Butylen oder eine Mischung aus 2 oder mehreren der genannten Homo-, Co- und Terpolymeren enthält.

6. Folie nach Anspruch 5, **dadurch gekennzeichnet, dass** die Mischungskomponente A ein Blend zweier Blendkomponenten I und II enthält, wobei die Blendkomponente I ein HDPE ist und die Blendkomponente II ein Polypropylenhomopolymeres oder ein Copolymeres aus Propylen und Ethylen oder Propylen und Butylen oder ein Terpolymeres aus Propylen, Ethylen und Butylen oder eine Mischung aus 2 oder mehreren der genannten Homo-, Co- und Terpolymeren ist.

7. Folie nach Anspruch 6, **dadurch gekennzeichnet, dass** das Verhältnis der Blendkomponenten I und II im Bereich von I : II = 20 : 80 bis 80 : 20 liegt.

8. Folie nach einem der Ansprüche 5 bis 7, **dadurch gekennzeichnet, dass** das Verhältnis der Mischungskomponenten A und B im Bereich von A : B = 10 : 90 bis 90 : 10 liegt.

9. Folie nach einem der Ansprüche 1 bis 8, **dadurch gekennzeichnet, dass** die Mattschicht eine Dicke von 0,5 bis 5 µm und die Gesamtfolie eine Dicke von 8 bis 50 µm aufweist.

10. Folie nach mindestens einem der Ansprüche 1 bis 9, **dadurch gekennzeichnet, dass** sie bei einem Meßwinkel von 85° einen Glanz von kleiner 80, vorzugsweise 25 bis 45, auf der matten Seite aufweist, gemessen nach ASTM-D 523-78.

11. Verfahren zur Herstellung einer Folie gemäß Anspruch 1 bis 10, **dadurch gekennzeichnet, dass** die den einzelnen Schichten der Folie entsprechenden Schmelzen durch eine Flachdüse coextrudiert werden, die coextrudierte Folie biaxial mit einem Längsstreckverhältnis von 4:1 bis 7:1 und einem Querstreckverhältnis von 8:1 bis 12:1 gestreckt wird, und die biaxial gestreckte Folie nach einer Thermofixierung dann gegebenenfalls corona-, plasma-, fluor- oder flammbehandelt wird.

12. Verwendung der Folie gemäß Anspruch 1 bis 10 als Verpackungsfolie.

13. Verwendung der Folie gemäß Anspruch 1 bis 10 als Folie zur Veredelung von grafischen Druckerzeugnissen, wobei die Mattseite nicht zum Druckerzeugnis zeigt.

14. Verwendung der Folie gemäß Anspruch 1 bis 10 als Trägerfolie für eine Klebeschicht.
